# EUROPEAN PATENT SPECIFICATION

(11) **EP 2 829 097 B1**
(45) Date of publication and mention of the grant of the patent: **28.04.2021**
(21) Application number: 12871840.0
(22) Date of filing: 20.03.2012
(51) Int. Cl.: H04W 16/00, H04W 88/00, H04B 17/327, H04B 17/20, H04W 24/08, H04B 7/02, H04W 24/10, H04W 4/02

(54) **RECEIVED SIGNAL QUALITY MEASUREMENT TRIGGERING AND REPORTING**
AUSLÖSUNG UND MELDUNG EINER MESSUNG DER QUALITÄT EMPFANGENER SIGNALE
DÉCLENCHEMENT ET RAPPORT DE MESURE DE QUALITÉ DE SIGNAL REÇU

(43) Date of publication of application: 28.01.2015
(73) Proprietor: Nokia Solutions and Networks Oy, 02610 Espoo (FI)
(72) Inventor: WANG, Xiaoyi, Beijing 100013 (CN); WU, Chunli, Beijing 102208 (CN); SKOV, Peter, Beijing 100044 (CN); MIAO, Deshan, Beijing 100016 (CN)
(74) Representative: Ruuskanen, Juha-Pekka
(86) International application number: PCT/CN2012/072643
(87) International publication number: WO 2013/138997

(56) References cited:
- EP-A1- 2 306 769
- WO-A1-2011/085204
- WO-A2-2010/140797
- WO-A2-2012/023827
- CN-A- 101 729 161
- US-A1- 2012 039 197
- 'LTE; TECHNICAL SPECIFICATION GROUP RADIO ACCESSNETWORK. EVOLVED UNIVERSAL TERRESTRIAL RADIO ACCESS (E-UTRA); RADIO RESOURCE CONTROL (RRC);PROTOCOL SPECIFICATION' 3GPP TS 36.331 V10.5.0 14 March 2012, XP055160803
- '3GPP Technical Specification Group Radio Access Network.' 3GPP TS 25.331 V11.1.0 16 March 2012, XP055160831

## Description

### Technical Field

The present invention relates generally to an apparatus and method for received signal quality measurement management, and particularly to an apparatus, method and computer program product for use in terminal and/or network devices for wireless communication such as according to LTE, LTE-A, triple carrier WCDMA and the like.

### Background

Prior art which is related to this technical field can e.g. be found in specifications 3GPP TR36.819 (current version 11.1.0) and 3GPP TS36.331 (current version 10.5.0).

The following meanings for the abbreviations used in this specification apply:
- 3GPP:: 3rd Generation Partnership Project
- CoMP:: Coordinated Multipoint
- CRS:: Common Reference Signal
- CSI:: Channel State Information
- eNB:: Evolved Node B
- LTE:: Long Term Evolution
- LTE-A:: LTE-Advanced
- RE:: Resource Element
- Rel.:: Release
- RRC:: Radio Resource Control
- RRH:: Remote Radio Head
- RS:: Reference Signal
- RSRP:: Reference Signal Received Power
- RSRQ:: Reference Signal Received Quality
- TP:: Transmission Point
- UE:: User Equipment
- WCDMA:: Wideband Code Division Multiple Access

In LTE Rel.11 CoMP WI, intra- and inter cell CSI-RS based CSI measurement is supported. CSI-RS resource is defined as a set of CSI-RS REs configured by high layer signalling. UE can be configured with multiple CSI-RS resources (as CoMP measurement set). Each can be corresponding to one TP or one cell depending eNB's configuration.

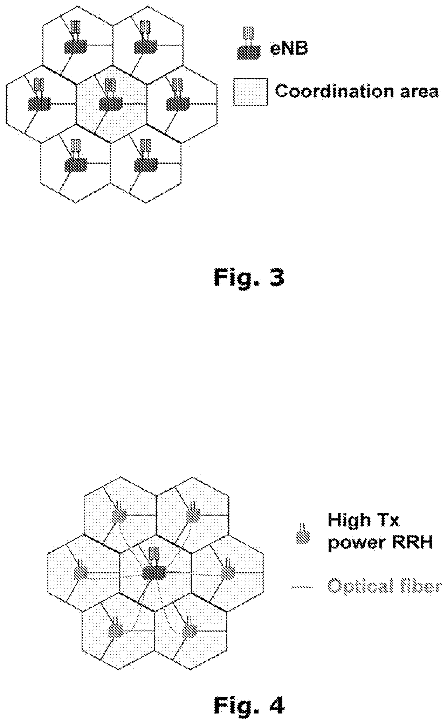

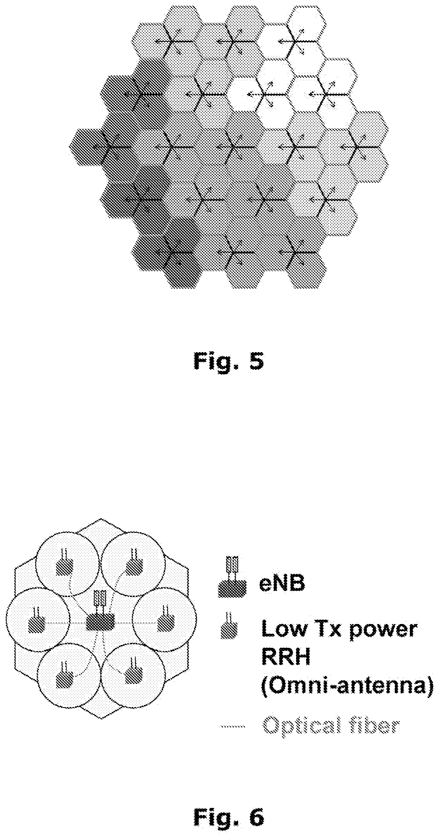

Figs. 3 to 6 show four scenarios considered with specification 3GPP TR36.819. Fig. 3 shows scenario 1 depicting a homogeneous network with intra-site CoMP. Fig. 4 shows scenario 2 depicting a homogeneous network with high Tx power RRHs. Fig. 5 shows a reference CoMP coordination cell layout for scenario 2. Fig. 6 illustrates scenarios 3 and 4, wherein scenario 3 is a heterogeneous network with low power RRHs within the macrocell coverage where the transmission/reception points created by the RRHs have different cell IDs as the macro cell, and scenario 4 is a heterogeneous network with low power RRHs within the macrocell coverage where the transmission/reception points created by the RRHs have the same cell IDs as the macro cell.

In the CoMP discussion of LTE Rel. 11, the scenario 4 (see Fig. 6) has been given a lot of attention, where one cell is managing multiple number of geometrically separated Tx/Rx points. As a consequence, the intra-cell CSI measurement and feedback is needed for the eNB to choose the TPs for CoMP operation. CoMP scenario 1/2/3 (see Figs. 3 to 6) assumes each TP has its own cell id thus inter cell CSI feedback is needed. Although there it could be relied on traditional CRS based received signal quality measurement report to manage inter-cell part, a unified solution for both inter and intra cell scenario is still preferable from standardization perspective. The reason is that from UE point of view, the UE is not aware if the TPs are from a same cell or not. Furthermore, such unified structure can eliminate the cell boarder issue, since when UE moves from one cell to another, CSI-RS based measurement set management can work continuously.

Recently, the CSI-RS based received signal quality measurement and report is agreed to provide the eNB enough information to manage the CoMP measurement set (by configuring multiple CSI-RS resources to this UE). Thus, there is a need for a detailed triggering and reporting procedure for CSI-RS based measurement.

In LTE Rel. 8-10, CRS based RSRP/RSRQ measurement was defined with different event triggers, e.g. when serving cell becomes better/worse than threshold, when neighbouring cell becomes better than threshold, when neighbouring cell becomes offset better than serving cell etc.

Those events might not be suitable for CSI-RS based measurement for CoMP set management, due to the following issues. The CoMP measurement set management is not designed for handover purpose. It rather intends to select several cells with similar received signal quality instead of only selecting the strongest one. Further, the CoMP measurement set includes multiple cells/TPs (here, the term TP is used in a sense as a generic term for geometrically separate signal transmitter which may have the same or different cell id in different scenarios), which means multiple serving cells/TPs for event triggering. Finally, there is no definition of "serving" or "neighbouring" to which current events could refer to in terms of transmission points.

As a solution, one of the TP in the measurement set could be defined as serving TP, and then existing events defined for CRS based RSRP could be applied. However, CoMP UE is normally located at the TP edge. That is to say the arrival signal strength from two TPs are similar for which reason these two TPs should be both in the measurement set. However, the RSRP of serving TP can easily be lower than that of another TP, which means frequent triggering the serving TP switching which is totally unnecessary.

International patent application WO2012/000252 discloses a method and apparatus for selecting a coordinated sending point through reporting of measurement results. International patent application publication number WO 2010/140797 A2 relates to a method and apparatus of reporting a measurement result in a wireless communication system.

United States patent application publication number US 2013/0148534 A1 relates to a method and apparatus for reporting a measurement result in a wireless communication system.

### Summary of the Invention

It is an object of the present invention to provide an apparatus and method for received signal quality measurement management triggering and reporting, according to the appended independent claims. Dependent claims constitute embodiments of the invention. Any subject-matter falling outside the scope of the claims is to be regarded as an example not in accordance with the invention.
7

### Brief Description of the Drawings

The above and other objects, features, details and advantages will become more fully apparent from the following detailed description of the preferred embodiments which is to be taken in conjunction with the appended drawings, in which:
Fig. 1 shows an implementation example for an apparatus according to certain embodiments of the present invention;
Fig. 2 shows a flow chart for illustrating a method according to certain embodiments of the present invention;
Fig. 3 shows scenario 1 according to specification 3GPP TR36.819 depicting a homogeneous network with intra-site CoMP;
Fig. 4 shows scenario 2 according to specification 3GPP TR36.819 depicting a homogeneous network with high Tx power RRHs;
Fig. 5 shows reference CoMP coordination cell layout for scenario 2 according to Fig. 4; and
Fig. 6 shows scenario 3/4 according to specification 3GPP TR36.819 depicting a network with low power RRHs within the macrocell coverage.

### Detailed Description of the preferred Embodiments

In the following, description is made to what are presently considered to be preferred embodiments of the present invention. It is to be understood, however, that the description is given by way of example only, and that the described embodiments are by no means to be understood as limiting the present invention thereto.

For example, for illustration purposes, in some of the following exemplary embodiments, received signal quality measurement management triggering and reporting in wireless communication in cellular communication networks as e.g. based on LTE, LTE Advanced or WCDMA is described. However, it should be appreciated that these exemplary embodiments are not limited for use among these particular types of wireless communication systems, and according to further exemplary embodiments, the present invention can be applied also to other types of communication systems and access networks in which received signal quality measurement management triggering and reporting in wireless communication is to be implemented and optimized.

Thus, certain embodiments of the present invention relate to mobile wireless communication systems, such as LTE, LTE Advanced and WCDMA. In more detail, certain embodiments of the present invention are related to the configuration of LTE/WCDMA user equipment and/or base station and components thereof such as integrated circuits and/or discrete elements.

However, as indicated above, the present invention is not limited thereto, but other embodiments of the present invention are related to general .wireless communication devices.

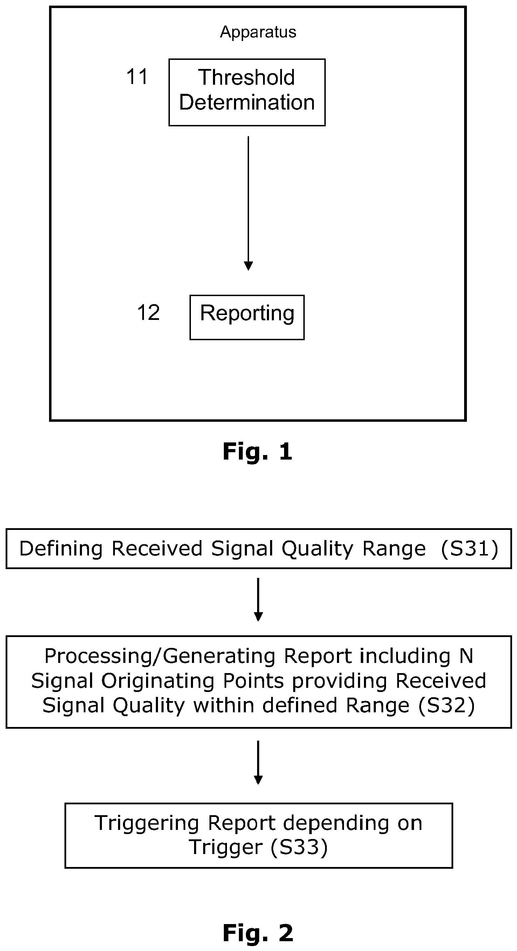

An implementation example according to certain embodiments of the present invention for an apparatus for received signal quality measurement management triggering and reporting is shown in Fig. 1.

Specifically, as shown in Fig. 1, the implementation example comprises an apparatus for use in a wireless communication device, comprising a threshold determination processor configured to define a received signal quality range including a best received signal quality as upper border, which is the best received signal quality among all received signal qualities measured in a received signal quality measurement procedure; and a reporting processor configured to process a report including a predetermined number of signal originating points providing a received signal quality at a reference location within the received signal quality range defined by the threshold determination processor.

Another implementation example according to certain embodiments of the present invention includes an apparatus for use in a wireless communication device, comprising threshold determination means for defining a received signal quality range including a best received signal quality as upper border, which is the best received signal quality among all received signal qualities measured in a received signal quality measurement procedure; and reporting means for processing a report including a predetermined number of signal originating points providing a received signal quality at a reference location within the received signal quality range defined by the threshold determination means.

According to certain embodiments of the present invention the above described implementation examples can be modified as follows, wherein one or more of the modifications, unless stated as excluding alternatives, can be freely combined.

The predetermined number of signal originating points can be an integer number N and comprise the N signal originating points providing the N best received signal qualities at the reference location within the received signal quality range, and if only an integer number M smaller than N of signal originating points provides received signal qualities at the reference location within the received signal quality range, the report can include the M signal originating points.

The threshold determination processor can be further configured to define the received signal quality range in accordance with a received instruction, and the reporting processor can be further configured to generate the report.

The reporting processor can be further configured to trigger the report if the signal originating points providing a received signal quality at the reference location within the received signal quality range change.

The reporting processor can be further configured to trigger the report if the N or M signal originating points change.

The reporting processor can be further configured to trigger the report and to exchange a signal originating point of the N or M signal originating points included in the report, if a signal originating point not element of the N or M signal originating points provides a received signal quality at the reference location which is better by a predetermined offset than a received signal quality of a signal originating point previously element of the N or M signal originating points, which provides a worst received signal quality at the reference location among the N or M signal originating points.

The reporting processor can be further configured to periodically generate the report according to a predetermined period.

The apparatus or any of its modifications as described above can be arranged and/or configured for use in a wireless communication system according to the long term evolution and/or the wideband code division multiple access specifications.

Specifically, the received signal quality measurement procedure can be a channel state information reference signal based received signal quality measurement such as regarding reference signal received power and/or reference signal received quality.

A specific implementation example according to certain embodiments of the present invention includes that any of the above described apparatuses is arranged and/or configured for use in a wireless communication device and further comprises wired interface circuitry, and wireless transceiver circuitry.

A further implementation example of the apparatus according to certain embodiments of the present invention includes that a terminal handset/base station comprises any of the above apparatuses.

Fig. 2 shows a principle flowchart of an example for a method according to certain embodiments of the present invention. That is, as shown in Fig. 3, this method comprises defining a received signal quality range including a best received signal quality as upper border, which is the best received signal quality in a radio resource management measurement among all received signal qualities measured in a received signal quality measurement procedure; and processing a report including a predetermined number of signal originating points providing a received signal quality at a reference location within the defined received signal quality range.

According to certain embodiments of the present invention the above described example method can be modified as follows, wherein one or more of the modifications can be freely combined unless explicitly stated as excluding alternatives.

The predetermined number of signal originating points can be an integer number N and comprise the N signal originating points providing the N best received signal qualities at the reference location within the received signal quality range, and if only an integer number M smaller than N of signal originating points provides received signal qualities at the reference location within the received signal quality range, the report can include the M signal originating points.

The defining the received signal quality range is performed in accordance with a received instruction and the processing the report includes generating the report.

The method can further comprise triggering the report if the signal originating points providing a received signal quality at the reference location within the received signal quality range change.

The method can further comprise triggering the report if the N or M signal originating points change.

The method can further comprise triggering the report and exchanging a signal originating point of the N or M signal originating points included in the report, if a signal originating point not element of the N or M signal originating points provides a received signal quality at the reference location which is better by a predetermined offset than a received signal quality of a signal originating point previously element of the N or M signal originating points, which provides a worst received signal quality at the reference location among the N or M signal originating points.

The generating the report can be performed periodically according to a predetermined period.

The defining the received signal quality range, as well as processing, generating and triggering the report can be performed according to protocols of the long term evolution and/or the wideband code division multiple access specifications.

Specifically, in this case the received signal quality measurement procedure can be a channel state information reference signal based received signal quality measurement such as regarding reference signal received power and/or reference signal received quality.

One option for performing the example of a method according to certain embodiments of the present invention is to use the apparatus described in connection with Fig. 1 or a modification thereof which becomes apparent from the embodiments as described herein below.

Certain embodiments of the present invention are described herein below in further detail. Reference is made to implementation examples which depict certain embodiments of the present invention. It is to be noted though, that the implementation examples are provided for illustrative purposes only and are not intended to be understood as limiting the invention thereto. Rather, it is to be understood that the features of the implementation examples may be interchanged and mixed as will be understood from the whole of the present specification.

Specifically, certain embodiments of the present invention are arranged to provide a new trigger and report for CSI-RS based received signal quality measurement (e.g. RSRP/RSRQ).

According to certain embodiments of the present invention, a triggering can be implemented by defining a window as received signal quality within X dB (X dB designating a configurable threshold, e.g. 3dB, 5dB, 10dB) worse than the quality of the best point/port. That is, from UE perspective it derives the RSRP for one point from one port so that it could be considered that what UE measures is a port or combination of multiple ports, and UE may or may not know to which point this port belongs to. However, the present invention is not limited to either one for technical synonymy regarding the issue considered here.

According to further certain embodiments of the present invention an initial report is triggered upon configuration of the CSI-RS based received signal quality measurement. The best N points/ports that fall into the window are reported. If a number M of points/ports that fall into the window is smaller than N, M points can be reported. The reported N or M points/ports can be considered as report set, wherein N is configurable e.g. by RRC signalling.

According to further certain embodiments of the present invention an event trigger after the initial report is when the best N or M points/ports that fall into the window change, i.e. when the report set changes.

According to still further certain embodiments of the present invention a "hysteresis" is applied to the points when comparing if the report set changes (i.e. that this is not applicable for the initial report upon configuration), e.g. the points from the outset of the report set should be better than the worst point/port in the set by some predefined/predetermined difference to be considered as replacing the point/port.

Alternatively, according to further certain embodiments of the present invention, instead of comparing between a previously and newly estimated report set, the UE can derive a serving points set from the configured CSI-RS feedback. Such serving point set can be used as reference for the comparison to newly obtained report set.

According to further certain embodiments of the present invention the report includes, when triggered, the index or/and received signal quality (e.g. RSRP/RSRQ) of the best M or N (M ≤ N) points/ports that fall into the window.

According to still further certain embodiments of the present invention a base station such as an eNB can also configure a periodical received signal quality report. In that case, the UE periodically reports the index of received signal quality of the best M or N points/ports that fall into the window.

Moreover, according to further certain embodiments of the present invention configurable parameters are a threshold to define the window, the "hysteresis" to avoid a too frequent change of the report set, and N as a maximum number of best points/ports to be reported.

For illustration purposes, below are described some implementation examples according to certain embodiments of the present invention:
Configuration example: Threshold: 5dB, Hysteresis: 2dB; N: 2.

1st measurement:
point/port 1: -100dBm; point/port 2: -103dBm; point/port 3: -105dBm

Initial trigger/report:
Trigger the report upon configuration and report the 2 best points/ports (1 and 2) that fall into the window [-105dBm,-100dBm].

2nd measurement:
point/port 1: -100dBm; point/port 2: -104dBm; point/port3: -101dBm

Event trigger after initial report:
Trigger the report as point/port3 is hysteresis better than point/port 2 (the worst in the report set), and report points/ports 1, 3.

3rd measurement:
point/port 1: -100dBm; point/port 2: -107dBm; point/port3: -108dBm;
Trigger the report as point/port3 falls out of the window after applying the hysteresis, and report points/ports 1.

According to certain embodiments of the present invention it is achieved that the proposed triggers and reports are adapted to the particular needs when managing CoMP measurement set in simple and more efficient manner. Specifically, compared with having an absolute threshold, it is ensured that the base station such as an eNB always has track on the best point/port and the points/ports with quality within a certain range compared to the best point/port. This can guarantee to always have a precious window to decide the measurement set even when the strongest TP changed. Further, when another TP in the measurement set becomes the strongest TP which frequently happens for CoMP UE, it does not trigger RSRP report. Moreover, the possibility to decouple RSRP/RSRQ reporting and CSI measurement configuration insures flexibility to configure CSI-RS resources across multiple transmission points.

As indicated above, certain embodiments of the present invention include radio frequency cellular chipset(s) and equipment such as according to LTE/LTE Advanced and/or WDCMA, but are not limited thereto.

According to the above description, it should thus be apparent that exemplary embodiments of the present invention provide, for example from the perspective of a terminal handset and/or a base station such as but not limited to an eNB, a communication device or a component thereof, an apparatus embodying the same, a method for controlling and/or operating the same, and computer program(s) controlling and/or operating the same as well as mediums carrying such computer program(s) and forming computer program product(s).

For example, described above are apparatuses, methods and computer program products capable of received signal quality measurement management triggering and reporting in wireless communication.

Implementations of any of the above described blocks, apparatuses, systems, techniques or methods include, as non limiting examples, implementations as hardware, software, for example in connection with a digital signal processor, an instruction set, firmware, special purpose circuits or application logic, general purpose hardware or controller or other computing devices, or some combination thereof. Software or application logic or an instruction set may be maintained on any one of various conventionally available computer readable media (which shall be understood as anything which can contain, store, communicate, propagate or transport instructions in connection with an instruction execution system). Further, it is to be understood that where reference is made to a processor, such processor is to be understood in its broadest sense and may, for example, additionally comprise or not comprise a memory (e.g., ROM, CD-ROM, etc.), and it may comprise a computer processor, an application specific integrated circuit (ASIC), a field-programmable gate array (FPGA), and/or other hardware components that have been programmed in such a way to carry out the described function.

Further, as used in this application, the term circuitry refers to all of the following: hardware-only circuit implementation (such as implementations in only analog and/or digital circuitry) and to combinations of circuits and software and/or firmware.

If desired, the different functions discussed herein may be performed in a different order and/or concurrently with each other. Furthermore, if desired, one or more of the above described functions may be optional or may be combined.

Although various aspects of the invention are set out in the appended independent claims, other aspects of the invention comprise other combinations of features from the described embodiments and/or the dependent claims with the features of the independent claims, and not solely the combinations explicitly set out in the claims.

What is described above is what is presently considered to be preferred embodiments of the present invention. However, as is apparent to the skilled reader, these are provided for illustrative purposes only and are in no way intended that the present invention is restricted thereto. Rather, it is the intention that all variations and modifications be included which fall within the scope of the appended claims.

## Claims

1. An apparatus for use in a communication device, comprising:
a threshold determination processor (11) configured to define (S31) a received signal quality range having a configurable size and including a best received signal quality as upper border, which is the best received signal quality among all of a plurality of received signal qualities measured in a received signal quality measurement procedure; and
a reporting processor (12) configured to process (S32) a report including a predetermined number of signal originating points providing a received signal quality at a reference location within the received signal quality range defined by the threshold determination processor (11).

2. The apparatus according to claim 1, wherein the predetermined number of signal originating points is an integer number N and comprises the N signal originating points providing the N best received signal qualities at the reference location within the received signal quality range, and if only an integer number M smaller than N of signal originating points provides received signal qualities at the reference location within the received signal quality range, the report includes the M signal originating points.

3. The apparatus according to claim 1 or 2, wherein the threshold determination processor (11) is further configured to define the received signal quality range in accordance with a received instruction, and the reporting processor (12) is further configured to generate the report.

4. The apparatus according to any one of claims 1 to 3, wherein the reporting processor (12) is further configured to trigger (S33) the report if the signal originating points providing a received signal quality at the reference location within the received signal quality range change.

5. The apparatus according to claim 2, wherein the reporting processor (12) is further configured to trigger (S33) the report if the N or M signal originating points change.

6. The apparatus according to claim 2, wherein the reporting processor (12) is further configured to trigger (S33) the report and to exchange a signal originating point of the N or M signal originating points included in the report, if a signal originating point not element of the N or M signal originating points provides a received signal quality at the reference location which is better by a predetermined offset than a received signal quality of a signal originating point previously element of the N or M signal originating points, which provides a worst received signal quality at the reference location among the N or M signal originating points.

7. The apparatus according to claim 3, wherein the reporting processor (12) is further configured to periodically generate the report according to a predetermined period.

8. The apparatus according to any one of claims 1 to 7, wherein the threshold determination processor (11) and the reporting processor (12) are arranged for use in a wireless communication system according to the long term evolution and/or the wideband code division multiple access specifications.

9. The apparatus according to claim 8, wherein the received signal quality measurement procedure is a channel state information reference signal based received signal quality measurement such as regarding reference signal received power and/or reference signal received quality.

10. A terminal handset comprising the apparatus according to any one of claims 1 to 9.

11. A base station comprising the apparatus according to claim 1 or 2.

12. A method for use in a communication device, comprising:
defining (S31) a received signal quality range having a configurable size and including a best received signal quality as upper border, which is the best received signal quality in a radio resource management measurement among all of a plurality of received signal qualities measured in a received signal quality measurement procedure; and
processing (S32) a report including a predetermined number of signal originating points providing a received signal quality at a reference location within the defined received signal quality range.

13. The method according to claim 12, wherein the predetermined number of signal originating points is an integer number N and comprises the N signal originating points providing the N best received signal qualities at the reference location within the received signal quality range, and if only an integer number M smaller than N of signal originating points provides received signal qualities at the reference location within the received signal quality range, the report includes the M signal originating points.

14. The method according to claim 12 or 13, wherein the defining the received signal quality range is performed in accordance with a received instruction, and the processing the report includes generating the report.

15. A computer program product embodied as a computer readable medium storing instructions which when run in a computer perform the steps of the method of claim 12.

## Patentansprüche

1. Einrichtung zur Verwendung in einer Kommunikationsvorrichtung, die Folgendes umfasst:
einen Schwellwertbestimmungsprozessor (11), der dazu ausgelegt ist, einen Empfangssignalqualitätsbereich, der eine auslegbare Größe aufweist und eine beste Empfangssignalqualität beinhaltet, als Obergrenze zu definieren (S31), die unter allen einer Vielzahl von Empfangssignalqualitäten, die bei einer Empfangssignalqualitätsmessprozedur gemessen werden, die beste Empfangssignalqualität ist; und
einen Berichtsprozessor (12), der dazu ausgelegt ist, einen Bericht zu verarbeiten (S32), der eine vorbestimmte Anzahl von Signalursprungspunkten beinhaltet, die eine Empfangssignalqualität an einer Referenzstelle im Empfangssignalqualitätsbereich bereitstellen, der vom Schwellwertbestimmungsprozessor (11) definiert wird.

2. Einrichtung nach Anspruch 1, wobei die vorbestimmte Anzahl von Signalursprungspunkten eine Ganzzahl N ist und die N Signalursprungspunkte umfasst, die die N besten Empfangssignalqualitäten an der Referenzstelle im Empfangssignalqualitätsbereich bereitstellen, und, wenn nur eine Ganzzahl M, die kleiner ist als N, von Signalursprungspunkten Empfangssignalqualitäten an der Referenzstelle im Empfangssignalqualitätsbereich bereitstellt, der Bericht die M Signalursprungspunkte beinhaltet.

3. Einrichtung nach Anspruch 1 oder 2, wobei der Schwellwertbestimmungsprozessor (11) ferner dazu ausgelegt ist, den Empfangssignalqualitätsbereich gemäß einer empfangenen Anweisung zu definieren, und der Berichtsprozessor (12) ferner dazu ausgelegt ist, den Bericht zu erzeugen.

4. Einrichtung nach einem der Ansprüche 1 bis 3, wobei der Berichtsprozessor (12) ferner dazu ausgelegt ist, den Bericht auszulösen (S33), wenn sich die Signalursprungspunkte, die eine Empfangssignalqualität an der Referenzstelle im Empfangssignalqualitätsbereich bereitstellen, ändern.

5. Einrichtung nach Anspruch 2, wobei der Berichtsprozessor (12) ferner dazu ausgelegt ist, den Bericht auszulösen (S33), wenn sich die N oder M Signalursprungspunkte ändern.

6. Einrichtung nach Anspruch 2, wobei der Berichtsprozessor (12) ferner dazu ausgelegt ist, den Bericht auszulösen (S33) und einen Signalursprungspunkt der N oder M Signalursprungspunkte, die im Bericht beinhaltet sind, auszutauschen, wenn ein Signalursprungspunkt, der kein Element der N oder M Signalursprungspunkte ist, an der Referenzstelle eine Empfangssignalqualität bereitstellt, die um einen vorbestimmten Versatz besser ist als eine Empfangssignalqualität eines Signalursprungspunkts, der zuvor ein Element der N oder M Signalursprungspunkte war und unter den N oder M Signalursprungspunkten an der Referenzstelle eine schlechteste Empfangssignalqualität bereitstellt.

7. Einrichtung nach Anspruch 3, wobei der Berichtsprozessor (12) ferner dazu ausgelegt ist, den Bericht gemäß einer vorbestimmten Periode periodisch zu erzeugen.

8. Einrichtung nach einem der Ansprüche 1 bis 7, wobei der Schwellwertbestimmungsprozessor (11) und der Berichtsprozessor (12) zur Verwendung in einem drahtlosen Kommunikationssystem gemäß den Spezifikationen Long Term Evolution und/oder Wideband Code Division Multiple Access angeordnet sind.

9. Einrichtung nach Anspruch 8, wobei die Empfangssignalqualitätsmessprozedur eine Empfangssignalqualitätsmessung, wie etwa hinsichtlich einer Referenzsignalempfangsleistung und/oder einer Referenzsignalempfangsqualität, auf Basis eines Kanalzustandsinformationsreferenzsignals ist.

10. Handendgerät, das die Einrichtung nach einem der Ansprüche 1 bis 9 umfasst.

11. Basisstation, die die Einrichtung nach Anspruch 1 oder 2 umfasst.

12. Verfahren zur Verwendung in einer Kommunikationsvorrichtung, das Folgendes umfasst:
Bestimmen (S31) eines Empfangssignalqualitätsbereichs, der eine auslegbare Größe aufweist und eine beste Empfangssignalqualität beinhaltet, als Obergrenze, die bei einer Funkressourcenverwaltungsmessung unter allen einer Vielzahl von Empfangssignalqualitäten, die bei einer Empfangssignalqualitätsmessprozedur gemessen werden, die beste Empfangssignalqualität ist; und
Verarbeiten (S32) eines Berichts, der eine vorbestimmte Anzahl von Signalursprungspunkten beinhaltet, die eine Empfangssignalqualität an einer Referenzstelle im definierten Empfangssignalqualitätsbereich bereitstellen.

13. Verfahren nach Anspruch 12, wobei die vorbestimmte Anzahl von Signalursprungspunkten eine Ganzzahl N ist und die N Signalursprungspunkte umfasst, die die N besten Empfangssignalqualitäten an der Referenzstelle im Empfangssignalqualitätsbereich bereitstellen, und, wenn nur eine Ganzzahl M, die kleiner ist als N, von Signalursprungspunkten Empfangssignalqualitäten an der Referenzstelle im Empfangssignalqualitätsbereich bereitstellt, der Bericht die M Signalursprungspunkte beinhaltet.

14. Verfahren nach Anspruch 12 oder 13, wobei das Definieren des Empfangssignalqualitätsbereichs gemäß einer empfangenen Anweisung durchgeführt wird und das Verarbeiten des Berichts das Erzeugen des Berichts beinhaltet.

15. Computerprogrammprodukt, das als ein computerlesbares Medium realisiert ist, auf dem Anweisungen gespeichert sind, die, wenn sie in einem Computer ausgeführt werden, die Schritte des Verfahrens von Anspruch 12 durchführen.

## Revendications

1. Appareil pour une utilisation dans un dispositif de communication, comprenant :
un processeur de détermination de seuil (11) configuré pour définir (S31) une plage de qualité de signal reçu ayant une taille configurable et incluant une meilleure qualité de signal reçu comme bordure supérieure, qui est la meilleure qualité de signal reçu parmi la totalité d'une pluralité de qualités de signal reçu mesurées dans une procédure de mesure de qualité de signal reçu ; et
un processeur de signalement (12) configuré pour traiter (S32) un signalement incluant un nombre prédéterminé de points d'origine de signal fournissant une qualité de signal reçu à un emplacement de référence au sein de la plage de qualité de signal reçu définie par le processeur de détermination de seuil (11).

2. Appareil selon la revendication 1, dans lequel le nombre prédéterminé de points d'origine de signal est un nombre entier N et comprend les N points d'origine de signal fournissant les N meilleures qualités de signal reçu à l'emplacement de référence au sein de la plage de qualité de signal reçu, et si uniquement un nombre entier M, inférieur à N, de points d'origine de signal fournit des qualités de signal reçu à l'emplacement de référence au sein de la plage de qualité de signal reçu, le signalement inclut les M points d'origine de signal.

3. Appareil selon la revendication 1 ou 2, dans lequel le processeur de détermination de seuil (11) est en outre configuré pour définir la plage de qualité de signal reçu conformément à une instruction reçue, et le processeur de signalement (12) est en outre configuré pour générer le signalement.

4. Appareil selon l'une quelconque des revendications 1 à 3, dans lequel le processeur de signalement (12) est en outre configuré pour déclencher (S33) le signalement si les points d'origine de signal fournissant une qualité de signal reçu à l'emplacement de référence au sein de la plage de qualité de signal reçu varient.

5. Appareil selon la revendication 2, dans lequel le processeur de signalement (12) est en outre configuré pour déclencher (S33) le signalement si les N ou M points d'origine de signal varient.

6. Appareil selon la revendication 2, dans lequel le processeur de signalement (12) est en outre configuré pour déclencher (S33) le signalement et pour échanger un point d'origine de signal des N ou M points d'origine de signal inclus dans le rapport, si un point d'origine de signal qui n'est pas un élément des N ou M points d'origine de signal fournit une qualité de signal reçu à l'emplacement de référence qui est meilleure, d'un décalage prédéterminé, qu'une qualité de signal reçu d'un point d'origine de signal qui était précédemment un élément des N ou M points d'origine de signal, qui fournit la pire qualité de signal reçu à l'emplacement de référence parmi les N ou M points d'origine de signal.

7. Appareil selon la revendication 3, dans lequel le processeur de signalement (12) est en outre configuré pour générer périodiquement le signalement selon une période prédéterminée.

8. Appareil selon l'une quelconque des revendications 1 à 7, dans lequel le processeur de détermination de seuil (11) et le processeur de signalement (12) sont conçus pour une utilisation dans un système de communication sans fil selon les spécifications d'évolution à long terme et/ou d'accès multiple par répartition en code à large bande.

9. Appareil selon la revendication 8, dans lequel la procédure de mesure de qualité de signal reçu est une mesure de qualité de signal reçu basée sur un signal de référence d'informations d'état de canal, comme se rapportant à une puissance reçue de signal de référence et/ou une qualité reçue de signal de référence.

10. Combiné téléphonique comprenant l'appareil selon l'une quelconque des revendications 1 à 9.

11. Station de base comprenant l'appareil selon la revendication 1 ou 2.

12. Procédé pour une utilisation dans un dispositif de communication, comprenant :
la définition (S31) d'une plage de qualité de signal reçu ayant une taille configurable et incluant une meilleure qualité de signal reçu comme bordure supérieure, qui est la meilleure qualité de signal reçu dans une mesure de gestion de ressources radio parmi la totalité d'une pluralité de qualités de signal reçu mesurées dans une procédure de mesure de qualité de signal reçu ; et
le traitement (S32) d'un signalement incluant un nombre prédéterminé de points d'origine de signal fournissant une qualité de signal reçu à un emplacement de référence au sein de la plage de qualité de signal reçu définie.

13. Procédé selon la revendication 12, dans lequel le nombre prédéterminé de points d'origine de signal est un nombre entier N et comprend les N points d'origine de signal fournissant les N meilleures qualités de signal reçu à l'emplacement de référence au sein de la plage de qualité de signal reçu, et si uniquement un nombre entier M, inférieur à N, de points d'origine de signal fournit des qualités de signal reçu à l'emplacement de référence au sein de la plage de qualité de signal reçu, le signalement inclut les M points d'origine de signal.

14. Procédé selon la revendication 12 ou 13, dans lequel la définition de la plage de qualité de signal reçu est réalisée conformément à une instruction reçue, et le traitement du signalement inclut la génération du signalement.

15. Produit programme d'ordinateur mis en œuvre sous la forme d'un support lisible par ordinateur stockant des instructions qui, lorsqu'elles sont exécutées dans un ordinateur, réalisent les étapes du procédé selon la revendication 12.
